# EUROPÄISCHE PATENTSCHRIFT

(11) **EP 1 070 859 B1**
(45) Veröffentlichungstag und Bekanntmachung des Hinweises auf die Patenterteilung: **15.09.2004**
(21) Anmeldenummer: 99120226.8
(22) Anmeldetag: 09.10.1999
(51) Int. Cl.: F16B 7/18

(54) **Verbindungseinrichtung mit zumindest zwei Profilstäben mit Nuten**
Fastening device with at least two profiled bars with grooves
Dispositif de fixation avec au moins deux barres profilées rainurées

(30) Priorität: 21.07.1999 DE 29912756 U; 17.09.1999 DE 29916259 U
(43) Veröffentlichungstag der Anmeldung: 24.01.2001
(73) Patentinhaber: FMS Förder- und Montage-Systeme Schmalzhofer GmbH, 75031 Eppingen-Mühlbach (DE)
(72) Erfinder: Schmalzhofer, Rainer, 75031 Eppingen (DE)
(74) Vertreter: Clemens, Gerhard, Dr.-Ing.

(56) Entgegenhaltungen:
- DE-A- 4 244 396
- DE-A- 19 520 892

## Beschreibung

### TECHNISCHES GEBIET

Die vorliegende Erfindung betrifft eine Verbindungseinrichtung mit zumindest zwei Profilstäben mit Nuten zum Verbinden der zumindest zwei im Wesentlichen senkrecht zueinanderstehenden Profilstäbe mit Nuten, wobei eine Plattenverbindereinheit an der Stirnseite eines ersten Profilstabes befestigt ist und die Plattenverbindereinheit in einer Nut mit Hinterschneidung des zweiten Profilstabes durch in Ausnehmungen der Plattenverbindereinheit verlaufenden Schraubeinheiten in Verbindung mit in die Hinterschneidung eingeführten Nutensteinen verankert ist.

### STAND DER TECHNIK

Es ist eine Vielzahl von Ausführungsbeispielen zum Herstellen einer Verbindung zwischen Profilstäben mit Nuten unter Einsatz eines Plattenverbinders bekannt, die jedoch den wesentlichen Nachteil aufweisen, dass eine zuverlässige Zentrierung der Nuten der einzelnen, miteinander verbundenen Profile zueinander nicht gewährleistet werden kann.

In der DE 195 20 892 A1 ist ein Plattenverbinder zum Verbinden von zwei im Wesentlichen senkrecht zueinander stehenden Profilen der eingangs genannten Art offenbart. Hierbei sind an dem Plattenverbinder Zentrierungen angeformt, die sich in zusammengesetztem Zustand in den Nuten der Profile formschlüssig anlegen.

### DARSTELLUNG DER ERFINDUNG

Ausgehend von dem genannten Stand der Technik liegt der vorliegenden Erfindung die Aufgabe beziehungsweise das technische Problem zugrunde, eine Verbindungseinrichtung anzugeben, die eine zuverlässige Zentrierung zum Anschluss zweier Profilstäbe mit Nuten über eine Plattenverbindereinheit gewährleistet, die einfach montierbar ist und wirtschaftlich hergestellt werden kann.

Die erfindungsgemäße Verbindungseinrichtung zeichnet sich demgemäß durch die Merkmale des unabhängigen Anspruchs 1 aus. Vorteilhafte Ausgestaltungen und Weiterbildungen sind Gegenstand der abhängigen Ansprüche.

Die erfindungsgemäße Verbindungseinrichtung zeichnet sich demgemäß dadurch aus, dass der Schraubenkopf jeder Schraubeinheit von den Abmessungen seiner Außenquerschnittskontur her so ausgebildet ist, dass er die Schraubeinheit innerhalb der Nut des ersten Profilstabes zentriert und der Schraubenschaft der Schraubeinheit von den Abmessungen seiner Außenquerschnittskontur her so ausgebildet ist, dass er zentrierend in die Nut des zweiten Profilstabes eingreift oder der in die Nut des zweiten Profilstabes eingeführte zumindest eine Nutenstein ein an diesem angeordnetes Zentrierelement aufweist, das eine Breite aufweist, die im Wesentlichen der Breite der Nut des zweiten Profilstabes entspricht und dadurch eine Zentrierung des Nutensteins innerhalb der Nut erfolgt.

Eine besonders bevorzugte Ausgestaltung zeichnet sich dadurch aus, dass der zylindrische Schraubenschaft der Schraubeinheiten einen Durchmesser aufweist, der im Wesentlichen der Breite der Nut des zweiten Profilstabes entspricht.

Bei der erfindungsgemäßen Verbindungseinrichtung können die zusätzlich angeformten, aus dem Stand der Technik bekannten Zentrierungen vollständig entfallen. Die Zentrierung übernehmen die Schraubeinheiten selbst, indem einerseits der Schraubenkopf zentrierend in der Nut des ersten Profilstabes anordenbar ist und andererseits der Schaft zentrierend in der Nut des zweiten Profilstabes einführbar ist. Dadurch kann die Plattenverbindereinheit kompakter ausgestaltet werden. Gleichzeitig wird eine einfache Montage und zuverlässige Zentrierung gewährleistet.

Eine konstruktiv besonders einfache Ausgestaltung, die neben einer einfachen Montage eine zuverlässige Zentrierung gewährleistet, zeichnet sich dadurch aus, dass einerseits der Schraubenkopf zentrierend wirkt und andererseits der in die Nut des zweiten Profilstabes eingeführte zumindest eine Nutenstein ein an diesem angeordnetes Zentrierelement aufweist, das eine Breite aufweist, die im Wesentlichen der Breite der Nut des zweiten Profilstabes entspricht und dadurch eine Zentrierung des Nutensteins innerhalb der Nut erfolgt.

Gemäß einem besonders bevorzugten Ausführungsbeispiel ist das Zentrierelement aufsteckbar auf den Nutenstein ausgebildet. Das Zentrierelement kann auch an den Nutenstein angeformt sein.

Besonders gute Zentriereigenschaften lassen sich dadurch erzielen, dass der Durchmesser jeder Ausnehmung der Plattenverbindereinheit im Wesentlichen dem Durchmesser des Schraubenschaftes der Schraubeinheit entspricht.

Eine vorteilhafte Ausgestaltung der erfindungsgemäßen Verbindungseinrichtung zeichnet sich dadurch aus, dass zwei Schraubeinheiten und eine Plattenverbindereinheit mit entsprechend zwei durchgehenden Ausnehmungen vorhanden sind und beide Schraubeinheiten in jeweils einen Nutenstein oder in einen gemeinsamen Nutenstein einschraubbar sind.

Besonders bevorzugt sind die Schraubeinheiten über eine Halteeinheit lösbar an der Plattenverbindereinheit angeordnet, welche Halteeinheit bevorzugt als Haltering ausgebildet ist. Dadurch bilden die Plattenverbindereinheiten in Verbindung mit den Schraubeinheiten eine in sich als ein Bauteil handhabbare Montageeinheit. Gleichzeitig können die Nutensteine bereits leicht angeschraubt sein. Zur Montage der Plattenverbindereinheit und zum Herstellen der Verbindung zwischen erstem Profilstab und zweitem Profilstab wird zunächst die Plattenverbindereinheit mit eingesetzten Schraubeinheiten und leicht angeschraubten Nutensteinen mittels einer Zentralschraube an der Stirnseite des ersten Profilstabes befestigt. Dabei werden die Schraubenköpfe der Schraubeinheiten zentrierend an die Nuten des ersten Profilstabes eingeführt. Dann wird der zweite Profilstab anmontiert, indem die Nutensteine in die Nut des zweiten Profilstabes eingeschoben werden. Die definitive Verankerung erfolgt dann durch Anziehen der Schraubeinheiten.

Eine besonders bevorzugte Ausgestaltung der erfindungsgemäßen Verbindungseinrichtung zeichnet sich dadurch aus, dass die Plattenverbindereinheit zumindest einen nach außen offenen über die Dicke der Plattenverbindereinheit durchgehenden Schlitz aufweist. Bevorzugt wird hierbei eine Weiterbildung eingesetzt, bei der die Breite des Schlitzes der Breite der Nut entspricht und die Tiefe des Schlitzes der Tiefe der Nut des ersten Profilstabs bzw. des zweiten Profilstabs des ersten Profilstabes entspricht.

Durch das Vorsehen eines Schlitzes kann die erfindungsgemäße Verbindungseinrichtung auch für Konstruktionen eingesetzt werden, bei der Scheibenelemente zwischen den Profilen angeordnet werden, ohne dass die Scheiben ausgeklinkt werden müssen. Die Scheiben können problemlos in den jeweils anschließenden Nuten arretierend gehalten angeordnet werden, ohne dass die Plattenverbindereinheit stört. Neben dem direkten Einführen von Scheiben ist es auch möglich, dass Einfassprofile für Scheiben eingesetzt werden.

Eine bevorzugte Ausgestaltung zeichnet sich dadurch aus, dass die Plattenverbindereinheit in einem Mittenrandbereich den Schlitz und an dem gegenüberliegenden Mittenrandbereich die Ausnehmung aufweist.

Eine hinsichtlich der Variabilität ihres Einsatzzwecks besonders bevorzugte Ausführungsvariante der erfindungsgemäßen Verbindungseinrichtung zeichnet sich dadurch aus, dass die Plattenverbindereinheit an den beiden übrigen Mittenrandbereichen jeweils eine Ausnehmung aufweist. Somit sind insgesamt drei Ausnehmungen für die Verschraubung vorhanden, sodass in der Richtung, in der dem Schlitz eine Ausnehmung gegenüberliegt, die Plattenverbindereinheit für die Montage von Scheibenelementen problemlos eingesetzt werden kann, wobei der anzuschließende Profilstab über eine Zentrierschraube angeschlossen werden kann. In der Richtung senkrecht hierzu ist es möglich, über zwei Zentrierschrauben den anderen Profilstab anzuschließen, sodass eine Verbindung mit hoher Festigkeit gewährleistet werden kann, wobei in dieser Verbindungsrichtung keine Scheibenelemente eingesetzt werden können.

Eine besonders bevorzugte Ausgestaltung der erfindungsgemäßen Verbindungseinrichtung zeichnet sich dadurch aus, dass die Plattenverbindereinheit über eine in eine Ausnehmung des ersten Profilstabes einschraubbare Zentralschraube an der Stirnseite des ersten Profilstabs verbindbar ist und der gemeinsame Nutenstein zwischen seinen zwei Ausnehmungen mit Innengewinde für die Schrauben eine Zentralausnehmung aufweist, durch die hindurch ein Werkzeug zum Einschrauben der Zentralschraube in die Ausnehmung des ersten Profilstabes oder die Zentralschraube selbst führbar ist. Mit dieser Ausgestaltung lässt sich eine Verbindung mit besonders hohen Verbindungskräften realisieren. Gleichzeitig kann aus der Platteneinheit, den beiden Schraubeinheiten, der Zentralschraube und dem gemeinsamen Nutenstein eine problemlos handzuhabende Vormontageeinheit gebildet werden.

Weitere Ausführungsformen und Vorteile der Erfindung ergeben sich durch die in den Ansprüchen ferner aufgeführten Merkmale sowie durch die nachstehend angegebenen Ausführungsbeispiele.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Detailexplosionsperspektive des Anschlusses eines ersten Profilstabes an einen zweiten Profilstab unter Einsatz einer Plattenverbindereinheit mit zentrierenden Schraubeinheiten,
- Fig. 2: schematischer Schnitt in Längsrichtung des zweiten Profilstabes gemäß Fig. 1 durch die Verbindungseinrichtung,
- Fig. 3: schematischer Schnitt durch die Verbindungseinrichtung entlang Schnittführung 3-3 in Fig. 2,
- Fig. 4: schematischer Schnitt durch die Verbindungseinrichtung entlang Schnittführung 4-4 in Fig. 2,
- Fig. 5: schematischer Längsschnitt in Richtung Längsachse des zweiten Profilstabes eines zweiten Ausführungsbeispiels einer Verbindungseinrichtung,
- Fig. 6: schematischer Schnitt durch die Verbindungseinrichtung entlang Schnittführung 6-6 gemäß Fig.5,
- Fig. 7: schematische Detailexplosionsperspektive des Anschlusses eines ersten Profilstabes an einen zweiten Profilstab unter Einsatz einer Plattenverbindereinheit mit zentrierenden Schraubeinheiten und einem Schlitz zum Anschluss eines Scheibenelementes,
- Fig. 8: schematischer Schnitt in Längsrichtung des zweiten Profilstabes gemäß Fig. 7 durch die Verbindungseinrichtung,
- Fig. 9-11: Ansicht unterschiedlicher Ausführungsvarianten der Plattenverbindereinheit,
- Fig. 12: schematische Detailexplosionsperspektive eines dritten Ausführungsbeispiels einer Verbindungseinrichtung,
- Fig. 13: schematische Detailexplosionsperspektive eines aus Platteneinheit, Schrauben, Zentralschrauben und gemeinsamen Nutenstein vormontierten Montageelementes.

### WEGE ZUM AUSFÜHREN DER ERFINDUNG

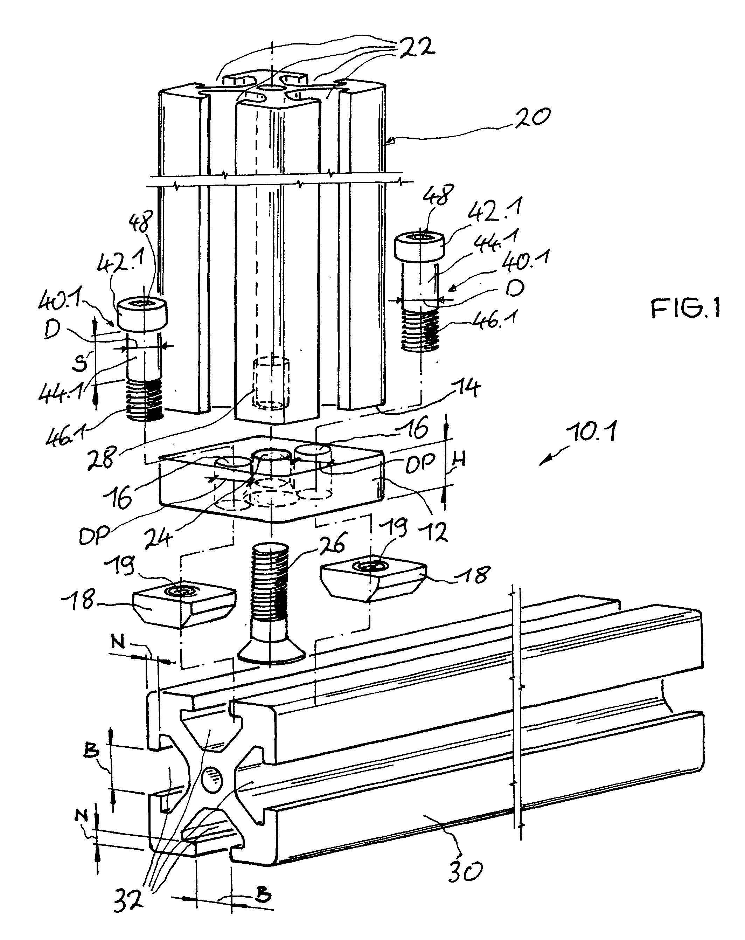

In Fig. 1 ist eine erste Ausführungsform einer Verbindungseinrichtung 10.1 für einen ersten Profilstab 20 und einen zweiten Profilstab 30 unter Einsatz einer Plattenverbindereinheit 12 detailmäßig in einer Explosionsperspektive schematisch dargestellt. Die beiden Profilstäbe 20, 30 sind rechtwinklig zueinander angeordnet. Die Profilstäbe 20, 30 sind als Aluminiumstrangpressprofile ausgebildet und haben auf ihrer Längsaußenseite jeweils eine Nut 22 mit einem Hinterschneidungsbereich, in den ein an sich bekannter Nutenstein eingeführt werden kann. Die Nutbreite der Nuten 32 des zweiten Profilstabes 30 ist in Fig. 1 mit B bezeichnet. Die Tiefe der Nut 32 im Bereich der Breite B ist in Fig. 1 mit N bezeichnet.

Die untere Stirnseite 14 des ersten Profilstabes 20 weist auf die Oberseite des in Fig. 1 waagerecht verlaufenden zweiten Profilstabes 30 hin. Auf dieser Stirnseite 14 ist die Plattenverbindereinheit 12, die im Wesentlichen als Kubus mit quadratischem Grundriss entsprechend der Außenumfangskontur des ersten Profilstabes 20 ausgebildet ist, über eine zentrale Schraubeinheit 26 an den ersten Profilstab 20 angeschlossen. Hierzu weist die Plattenverbindereinheit 12 eine zentrale durchgehende Ausnehmung 24 auf und am ersten Profilstab 20 ist zentral eine Ausnehmung 28 mit Innengewinde vorhanden, in die die Schraubeinheit 26 eingeschraubt wird. Die zentrale Ausnehmung 28 weist unterseitig einen konisch sich verjüngenden Bereich auf, der entsprechend dem konischen Kopf der Schraubeinheit 26 ausgebildet ist, so dass dieser flächenbündig in der Plattenverbindereinheit 12 vorhanden ist.

Symmetrisch zur zentralen Ausnehmung 24 sind an der Verbindereinheit 12 zwei weitere durchgehende Ausnehmungen 16 mit einem Durchmesser DP vorhanden. Die Plattenverbindereinheit 12 besitzt eine Höhe H.

Zum Verankern des ersten Profilstabes 20 mit der Plattenverbindereinheit 12 an dem zweiten Profilstab 30 wird in zwei gegenüberliegenden Nuten 22 des ersten Profilstabes 20 jeweils eine Schraubeinheit 40.1 von unten her eingeschoben, das heißt bevor die Plattenverbindereinheit 12 über die Schraubeinheit 26 an der Stirnseite 14 des ersten Profilstabes 20 angeschlossen wird, welche Schraubeinheiten 40.1 einen zylindrischen Schraubenschaft 44.1 mit glatter Außenwandung besitzen, der durch die Ausnehmungen 16 der Plattenverbindereinheit 12 geführt ist. Der Schraubenschaft 44.1 besitzt einen Durchmesser D, der im Wesentlichen dem Durchmesser DP der Ausnehmungen 16 der Plattenverbindereinheit 12 entspricht. Die Länge des Schraubenschaftes 44.1 ist in Fig. 1 mit S angegeben. An diesen Schraubenschaft 44.1 schließt ein Außengewindebereich 46.1 an.

Der Außengewindebereich 46.1 wird jeweils in ein Innengewinde 19 eines Nutensteins 18 eingeschraubt, welcher Nutenstein 18 in die der Plattenverbindereinheit 12 zugewandte Nut 32 des zweiten Profilstabes 30 in entsprechender Position eingeschoben ist.

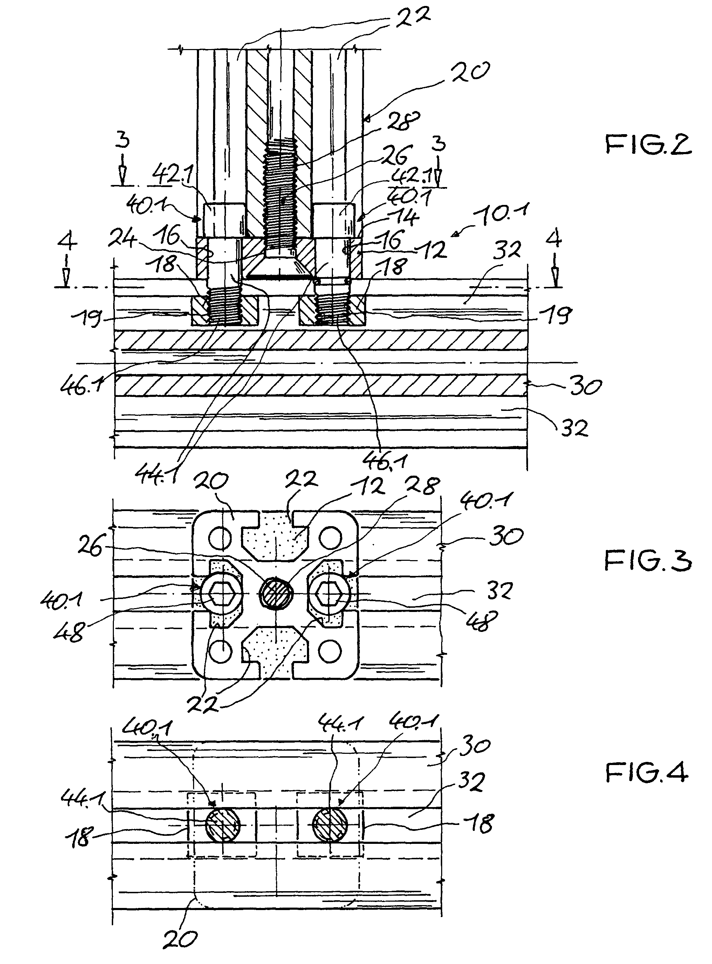

Die Schraubeinheit 40.1 besitzt einen zylindrischen Schraubenkopf 42.1 mit einer Mehrkantinnenkontur 48 zum Ansatz eines Werkzeuges. Die Außenkontur des Schraubenkopfes 42.1 ist dabei so bemessen, dass dieser bei in die Nut 22 eingeführtem Zustand entlang dreier Mantellinien 46 (Fig. 3) zentrierend in der Nut 22 vorhanden ist. Dadurch ist die Plattenverbindereinheit 12 ebenfalls zentrierend an dem ersten Profilstab 20 angeordnet.

Die Länge S des Schraubenschaftes 44.1 ist dabei so bemessen, dass sie größer ist als die Höhe H der Plattenverbindereinheit 12 und damit bereichsweise in die Nut 32 des zweiten Profilstabes 30 reicht. Gleichzeitig ist der Durchmesser D des Schraubenschaftes 44.1 im Wesentlichen gleich wie die Breite B der Nut 32 des zweiten Profilstabes 30 ausgebildet, so dass durch Einführen des Schraubenschaftes 44.1 in die Nut 32 ebenfalls eine zentrierende Wirkung zwischen Plattenverbindereinheit 12 und zweitem Profilstab 30 durch die Schraubeinheit 40.1 erfolgt. Die eigentliche Verankerung folgt dann durch Anziehen der Schraubeinheiten 40.1, wobei sich deren Außengewindebereich 46.1 in das Innengewinde 19 des Nutensteins 18 eindreht.

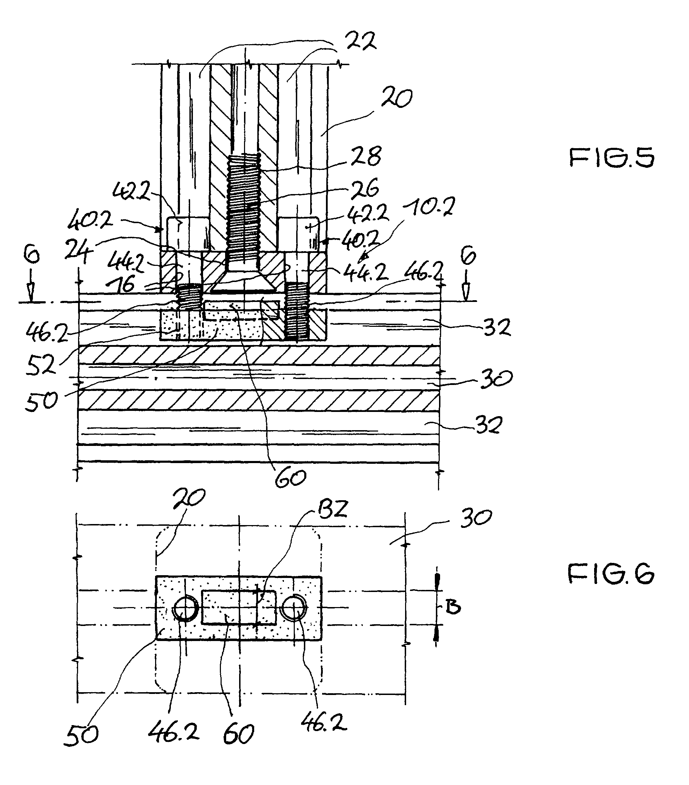

In den Fig. 5 und 6 ist eine alternative Ausführungsform einer Verbindungseinrichtung 10.2 dargestellt. Gleiche Bauteile tragen dasselbe Bezugszeichen und werden nicht nochmals erläutert. Es werden hier ebenfalls Schraubeinheiten 40.2 eingesetzt, deren Schraubenkopf 42.2 diesselbe Geometrie aufweist wie der Schraubenkopf 42.1 gemäß dem Ausführungsbeispiel der Fig. 1 bis 4. Der Schraubenkopf 42.2 übernimmt hier ebenfalls eine zentrierende Wirkung zwischen Plattenverbinder 12 und Stirnseite 14 des ersten Profilstabes 20.

Die zentrierende Wirkung zwischen Plattenverbinder 12 und dem zweiten Profilstab 30 wird jedoch nicht von dem Schraubenschaft 44.2 der Schraubeinheit 40.2 übernommen, sondern durch eine auf einem Nutenstein 50 aufgesteckte Zentriereinheit 60, die eine Breite BZ aufweist, die im Wesentlichen der Breite B der Nut 32 des zweiten Profilstabes entspricht und in diese bereichsweise hineinragt. Der Nutenstein 50 besitzt zwei Ausnehmungen mit Innengewinde 52, in die jeweils eine Schraubeinheit 40.2 von oben her einschraubbar ist.

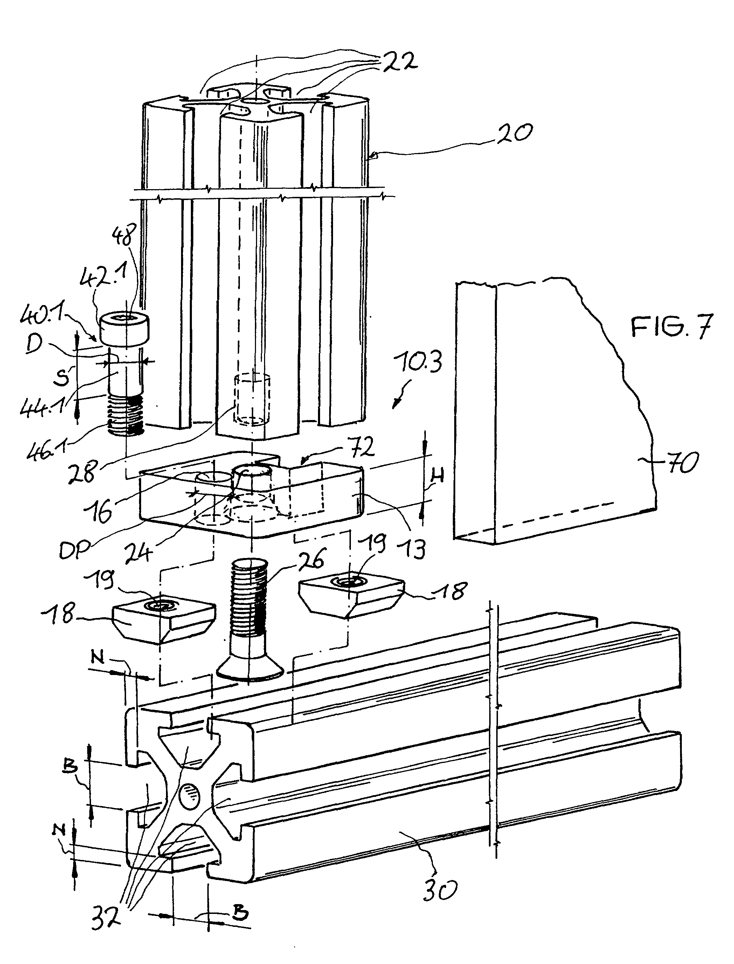

In Fig. 7 ist eine Verbindungseinrichtung 10.3 dargestellt, die eine geänderte Plattenverbindereinheit 13 aufweist. Gleiche Bauteile wie die Verbindungseinrichtung 10.1 gemäß Fig. 1 tragen dasselbe Bezugszeichen und werden nicht nochmals erläutert.

Im Unterschied zu der oben beschriebenen Plattenverbindereinheit 12 besitzt die Plattenverbindereinheit 13 gemäß Fig. 7 lediglich eine Ausnehmung 16 für eine Zentrierschraube 40.1. Am gegenüberliegenden Mittenrand der Plattenverbindereinheit ist ein nach außen offener über die gesamte Dicke (H) der Plattenverbindereinheit 13 durchgehender Schlitz 72 vorhanden. Die Schlitztiefe L entspricht im Wesentlichen der Tiefe der Nut 22 des Profilstabes 20. Die Breite B des Schlitzes entspricht im Wesentlichen der Breite der Nut 22 beziehungsweise 32. Durch das Vorsehen des Schlitzes 72 ist es problemlos möglich, ein Scheibenelement 70 arretierend in der Nut 32 und der Nut 22 des zweiten beziehungsweise ersten Profilstabes 30 beziehungsweise 20 einzuschieben, ohne dass an der Stelle der Plattenverbindereinheit 13 eine Ausklinkung des Scheibenelementes 70 vorgenommen werden muss.

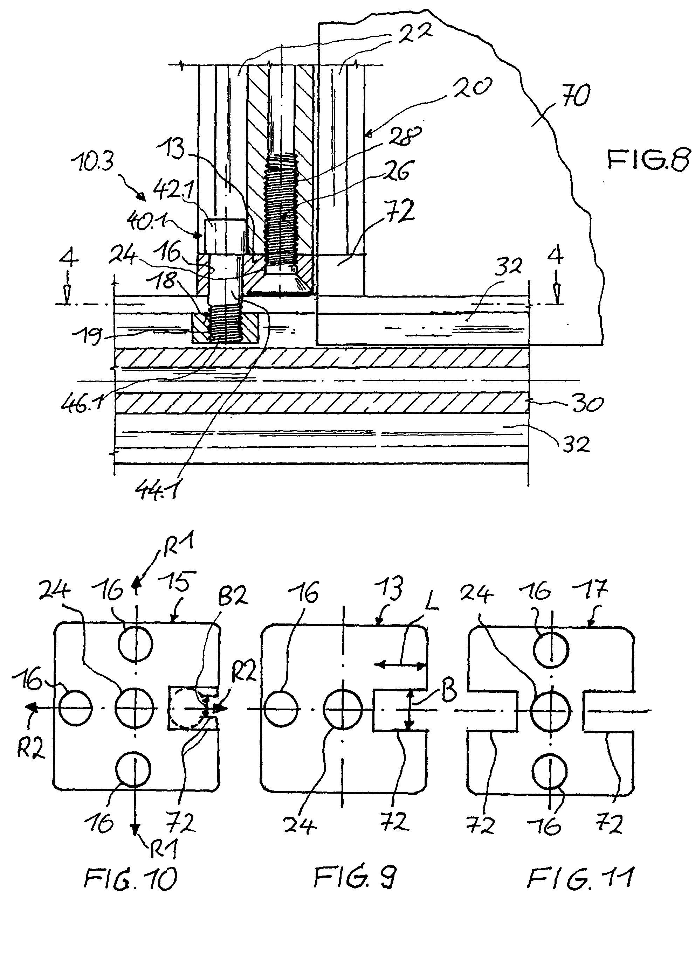

Bei der Darstellung in Fig. 8 ist von einem durchsichtigen Scheibenelement ausgegangen worden, sodass bestimmte Kanten der Profilstäbe sichtbar sind.

Die Plattenverbindereinheit 13 ist in Fig. 9 in einer Draufsicht dargestellt.

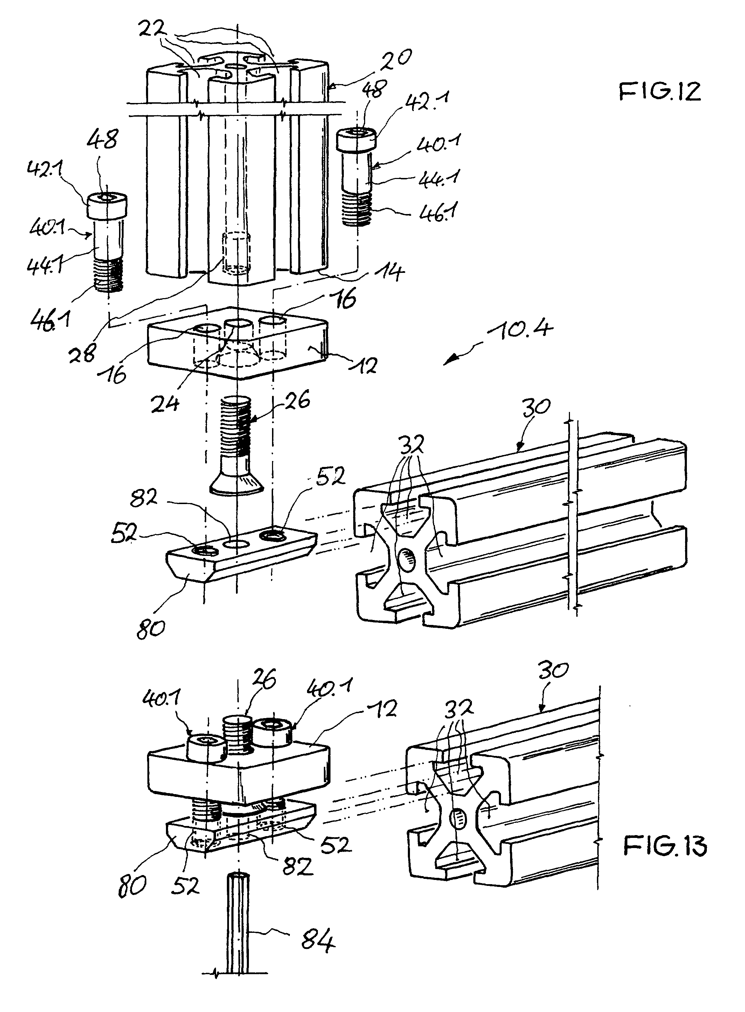

Eine weitere Ausgestaltung einer Plattenverbindereinheit 15 zeigt die Fig. 10 in einer Draufsicht. Hier sind zusätzlich zwei weitere Ausnehmungen 16 für Zentrierschrauben angeordnet, die im Mittenrandbereich auf einer Symmetrieachse (Richtungspfeil R1) senkrecht zu der durch die Ausnehmung 16 und den Schlitz 72 verlaufenden Symmetrieachse (Richtungspfeil R2) angeordnet sind. Somit steht eine Plattenverbindereinheit 15 zur Verfügung, die in Richtung R2 zum Anschluss von Scheibenelementen eingesetzt werden kann, wobei der darunter befindliche zweite Profilstab über eine Zentrierschraube angeschlossen werden kann. In der Richtung R1 senkrecht hierzu steht eine Plattenverbindereinheit 15 zur Verfügung, bei der der darunterliegende zweite Profilstab über zwei Zentrierschrauben angeschlossen werden kann, ohne dass Scheibenelemente eingesetzt werden können, sodass ein Anschluss mit hoher Festigkeit zur Verfügung steht.

In Fig. 11 ist eine weitere Ausführungsvariante einer Plattenverbindereinheit 17 dargestellt, bei der zwei gegenüberliegende Schlitze 72 vorhanden sind. Senkrecht hierzu ist am jeweiligen Mittenrandbereich jeweils eine Ausnehmung 16 für eine Zentrierschraube angeordnet. Die zentrale Ausnehmung 24 ist bei sämtlichen Ausführungsvarianten vorhanden.

In Fig. 10 ist alternativ gestrichelt im Bereich des rechten Schlitzes eine weitere Ausführungskonturform des Schlitzes dargestellt. Zur Öffnung hin besitzt der Schlitz eine Breite B2, die geringer ist als die Breite der Nut B. Daran anschließend im Inneren ist eine kreisförmige Ausnehmung gestrichelt dargestellt, deren Durchmesser den Ausnehmungen 16 entspricht. Dadurch kann diese Ausführungsform sowohl zum zentrierenden Anschluss der Profile über Schraubelemente als auch zum Einsatz bei Plattenelementen mit einer Breite B2 eingesetzt werden.

In Fig. 12 ist in Explosionsdarstellung eine Verbindungseinrichtung 10.4 dargestellt, die bevorzugt eingesetzt wird. Sie entspricht ihrem Aufbau nach im Wesentlichen der Verbindungseinrichtung 10.2 gemäß den Figuren 5 und 6. Gleiche Bauteile tragen das gleiche Bezugszeichen und werden nicht nochmals erläutert. Der Unterscheid zur Verbindungseinrichtung 10.2 liegt bei der Verbindungseinrichtung 10.4 darin, dass ein gemeinsamer Nutenstein 80 eingesetzt wird, der zwischen den beiden Innengewinden 52 eine zentrale Ausnehmung 82 aufweist. Diese Ausnehmung 82 bietet eine großen Vorteil. Es kann nämlich ein vormontiertes Montageteil hergestellt werden, welches in Fig. 13 im linken Bereich dargestellt ist. Dieses Vormontagebauteil besteht aus der Platteneinheit 12, den Schraubeinheiten 40, der Zentralschraube 26 und dem gemeinsamen Nutenstein 80. Die Schraubeinheiten 40.1 sind bereichsweise in die Innengewinde 52 des Nutensteins 18 eingeschraubt. Gleichzeitig ist die Zentralschraube 26 in die Ausnehmung 24 eingeführt. In diesem Zustand ist es problemlos möglich, durch Ansatz eines Werkzeuges 84 von unten durch die Ausnehmung 82 des Nutsteins 80 hindurch die Zentralschraube 26 in die Ausnehmung 28 des ersten Profilstabes 20 einzuschrauben. Nach Herstellen dieser Verbindung kann der gemeinsame Nutenstein 80 problemlos in die Nut 32 des zweiten Profilstabes 30 eingeschoben werden und nach Erreichen seiner vorgegebenen Position über die Schrauben 40.1 verspannt werden. Das Werkzeug 84 ist hier als Sechskantschlüssel ausgebildet, dass in eine entsprechende Innensechskantkontur des Kopfes der Zentralschraube 26 eingreift.

Das vormontierte Montagebauteil gemäß Fig. 13 vereinfacht und verkürzt die Montage vor Ort wesentlich. Gleichzeitig kann durch den gemeinsamen Nutenstein 80 in Verbindung mit den beabstandet eingeschraubten Schraubeinheiten 40.1 eine hoch beanspruchbare Verbindung zwischen dem ersten Profilstab 20 und dem zweiten Profilstab 30 hergestellt werden.

## Patentansprüche

1. Verbindungseinrichtung (10.1; 10.2) mit zumindest zwei Profilstäben (20; 30) mit Nuten (22; 32) zum Verbinden der zumindest zwei im Wesentlichen senkrecht zueinanderstehenden Profilstäbe (20; 30), wobei eine Plattenverbindereinheit (12) an der Stirnseite (14) eines ersten Profilstabes (20) befestigt ist und die Plattenverbindereinheit (12) in einer Nut (32) mit Hinterschneidung des zweiten Profilstabes (30) durch in Ausnehmungen (16) der Plattenverbindereinheit (12) verlaufenden Schraubeinheiten (40) in Verbindung mit in die Hinterschneidung eingeführten Nutensteinen (18) verankert ist,
**dadurch gekennzeichnet, dass**
- der Schraubenkopf (42) jeder Schraubeinheit (40) von den Abmessungen seiner Außenquerschnittskontur her so ausgebildet ist, dass er die Schraubeinheit (40) innerhalb der Nut (22) des ersten Profilstabes (20) zentriert und
- der Schraubenschaft (44) jeder Schraubeinheit (40) von den Abmessungen seiner Außenumfangskontur her so ausgebildet ist, dass er zentrierend in die Nut (32) des zweiten Profilstabes (30) eingreift oder der in die Nut (32) des zweiten Profilstabes (30) eingeführte zumindest eine Nutenstein (50) ein an diesem angeordnetes Zentrierelement (60) aufweist, das eine Breite (BZ) aufweist, die im Wesentlichen der Breite (B) der Nut (32) des zweiten Profilstabes (30) entspricht und dadurch eine Zentrierung des Nutensteins (50) innerhalb der Nut (32) erfolgt.

2. Verbindungseinrichtung nach Anspruch 1,
**dadurch gekennzeichnet, dass**
- der zylindrische Schraubenschaft (44) der Schraubeinheiten (40) einen Durchmesser (D) aufweist, der im Wesentlichen der Breite (B) der Nut (32) des zweiten Profilstabes (30) entspricht.

3. Verbindungseinrichtung nach Anspruch 1 und/oder 2,
**dadurch gekennzeichnet, dass**
- der Schraubenkopf (42) der Schraubeinheiten eine zylindrische Kontur aufweist, die entlang drei Mantellinien (46) an der Innenkontur der Nut (22) des ersten Profilstabes (20) zentrierend anliegt.

4. Verbindungseinrichtung nach Anspruch 1 und/oder 2,
**dadurch gekennzeichnet, dass**
- das Zentrierelement (60) als auf den Nutenstein (50) aufsteckbares oder angeformtes Aufsteckelement ausgebildet ist.

5. Verbindungseinrichtung nach einem oder mehreren der vorstehenden Ansprüche,
**dadurch gekennzeichnet, dass**
- der Durchmesser jeder Ausnehmung (16) im Wesentlichen dem Durchmesser (D) des Schraubenschaftes (44) der Schraubeinheit (40) entspricht.

6. Verbindungseinrichtung nach einem oder mehreren der vorstehenden Ansprüche,
**dadurch gekennzeichnet, dass**
- zwei Schraubeinheiten (40) und eine Plattenverbindereinheit (12) mit entsprechend zwei durchgehenden Ausnehmungen (16) vorhanden sind und beide Schraubeinheiten in jeweils einen Nutenstein (18) oder in einen gemeinsamen Nutenstein (50; 80) mit entsprechenden Innengewinden (52) einschraubbar sind.

7. Verbindungseinrichtung nach einem oder mehreren der vorstehenden Ansprüche,
**dadurch gekennzeichnet, dass**
- der Schraubenkopf (42) der Schraubeinheit (40) eine Mehrkantinnenkontur zum Ansatz eines Werkzeuges aufweist.

8. Verbindungseinrichtung nach einem oder mehreren der vorstehenden Ansprüche,
**dadurch gekennzeichnet, dass**
- die Schraubeinheiten über eine Halteeinheit, insbesondere Haltering, lösbar an der Plattenverbindereinheit gehalten ist.

9. Verbindungseinrichtung (10.3) nach einem oder mehreren der vorstehenden Ansprüche,
**dadurch gekennzeichnet, dass**
- die Plattenverbindereinheit (13) zumindest einen nach außen offenen über die Dicke der Plattenverbindereinheit (13) durchgehenden Schlitz (72) aufweist.

10. Verbindungseinrichtung nach Anspruch 9,
**dadurch gekennzeichnet, dass**
- die Breite (B) des Schlitzes (72) der Breite (B) der Nut (22; 32) des ersten Profilstabs bzw. des zweiten Profilstabs entspricht.

11. Verbindungseinrichtung nach Anspruch 10,
**dadurch gekennzeichnet, dass**
- die Tiefe (L) des Schlitzes (72) der Tiefe der Nut (22) des ersten Profilstabes (20) entspricht.

12. Verbindungseinrichtung nach einem oder mehreren der Ansprüche 9 bis 11,
**dadurch gekennzeichnet, dass**
- die Plattenverbindereinheit (13) in einem Mittenrandbereich den Schlitz (72) und an dem gegenüberliegenden Mittenrandbereich die Ausnehmung (16) aufweist.

13. Verbindungseinrichtung nach Anspruch 12,
**dadurch gekennzeichnet, dass**
- die Plattenverbindereinheit (15) an den beiden übrigen Mittenrandbereichen jeweils eine Ausnehmung (16) aufweist.

14. Verbindungseinrichtung nach einem oder mehreren der Ansprüche 9 bis 11,
**dadurch gekennzeichnet, dass**
- die Plattenverbindereinheit (17) an sich gegenüberliegenden Mittenrandbereichen jeweils einen Schlitz (72) aufweist und an den zwei anderen quer dazu vorhandenen Mittenrandbereichen jeweils eine Ausnehmung (16) vorhanden ist.

15. Verbindungseinrichtung nach Anspruch 6,
**dadurch gekennzeichnet, dass**
- die Plattenverbindereinheit (12) über eine in eine Ausnehmung (28) des ersten Profilstabes (20) einschraubbare Zentralschraube (26) an der Stirnseite der ersten Profilstabs verbindbar ist und
- der gemeinsame Nutenstein (80) zwischen seinen zwei Ausnehmungen mit Innengewinde (52) für die Schraubeinheiten (40.1) eine Zentralausnehmung (82) aufweist, durch die hindurch ein Werkzeug (84) zum Einschrauben der Zentralschraube (26) in die Ausnehmung (28) des ersten Profilstabes (20) oder die Zentralschraube selbst führbar ist.

## Claims

1. A connecting device (10.1; 10.2) with at least two profile bars (20; 30) with grooves (22; 32), for connecting said least two profiled bars (20; 30) that are essentially perpendicular to one another, one plate connector unit (12) being fastened to the end (14) of a first profiled bar (20) and the plate connector unit (12) being anchored in a groove (32) with undercut in the second profiled bar (30) by means of screw units (40) extending in recesses (16) in the plate connector unit (12), in conjunction with sliding blocks (18), inserted in said undercut
wherein
- the geometry of the screw head (42) of every screw unit (40) is designed related to the measuring of the outer cross section contour such that it centers the screw unit (40) within the groove (22) in the first profiled bar (20) and
- the geometry of every shank (44) of the screw unit (40) is designed related to the measuring of the outer cross section contour such that it engages with a centering effect in the groove (32) in the second profiled bar (30) or the at least one sliding block (50) that is inserted into the groove (32) in the second profiled bar (30) has a centering element (60) which is arranged thereon and has a width (BZ) which essentially corresponds to the width (B) of the groove (32) in the second profiled bar (30) and, as a result, the sliding block (50) is centered within the groove (32).

2. The connecting device as claimed in claim 1, wherein the cylindrical shank (44) of the screw units (40) has a diameter (D) which essentially corresponds to the width (B) of the groove (32) in the second profiled bar (30).

3. The connecting device as claimed in claim 1 and/or 2, wherein the screw head (42) of the screw units has a cylindrical contour which rests, along three envelope lines (46), with a centering effect on the inner contour of the groove (22) in the first profiled bar (20).

4. The connecting device as claimed in claim 1 and/or 2, wherein the centering element (60) is designed as a plug-on element that can be plugged or integrally molded onto the sliding block (50).

5. The connecting device as claimed in one or more of the preceding claims, wherein the diameter of every recess (16) essentially corresponds to the diameter (D) of the shank (44) of the screw unit (40).

6. The connecting device as claimed in one or more of the preceding claims, wherein there are two screw units (40) and one plate connector unit (12) with, correspondingly, two continuous recesses (16), and both screw units can be screwed into one sliding block (18) each or into a common sliding block (50; 80) with corresponding internal threads (52).

7. The connecting device as claimed in one or more of the preceding claims, wherein the screw head (42) of the screw unit (40) has a polygonal internal contour for a tool to be attached.

8. The connecting device as claimed in one or more of the preceding claims, wherein the screw units is held releasably on the plate connector unit by a retaining unit, especially a retaining ring.

9. The connecting device (10.3) as claimed in one or more of the preceding claims, wherein the plate connector unit (13) has at least one outwardly open, continuous slot (72)

10. The connecting device as claimed in claim 9, wherein the width (B) of the slot (72) corresponds to the width (B) of the groove (22; 32) of the first respectivly the second profil bar.

11. The connecting device as claimed in claim 10, wherein the depth (L) of the slot (72) corresponds to the depth of the groove (22) in the first profiled bar (20).

12. The connecting device as claimed in one or more of claims 9 to 11, wherein the plate connector unit (13) has the slot (72) in a central edge area and the recess (16) in the opposite central edge area.

13. The connecting device as claimed in claim 12, wherein the plate connector unit (15) has a recess (16) in each case in the two remaining central edge areas.

14. The connecting device as claimed in one or more of claims 9 to 11, wherein the plate connector unit (17) has a slot (72) in each case in opposite central edge areas, and there is a recess (16) in each case in the two other central edge areas present transversely thereto.

15. The connecting device as claimed in claim 6, wherein the plate connector unit (12) can be connected with a central screw (26) at the front area of the first profil bar which can be screwed in a recess (28) of the first profil bar (20) and the common sliding block (80) has, between its two recesses with internal threads (52) for the screw units (40.1), a central recess (82) through which a tool (84) can be led to screw the central screw (26) into the recess (28) in the first profiled bar (20), or through which the central screw itself can be led.

## Revendications

1. Dispositif de liaison (10.1 ; 10.2) comprenant au moins deux barres profilées (20 ; 30) munies de rainures (22 ; 32); en vue de relier les deux barres profilées (20 ; 30) prévues au minimum, pour l'essentiel perpendiculaires l'une à l'autre, une unité de solidarisation (12) à plaquette étant fixée à la face extrême (14) d'une première barre profilée (20), et ladite unité de solidarisation (12) à plaquette étant ancrée dans une rainure (32) à contre-dépouille de la seconde barre profilée (30), par l'intermédiaire d'unités de vissage (40) s'étendant dans des évidements (16) de ladite unité de solidarisation (12) à plaquette, en association avec des coulisseaux (18) introduits dans la contre-dépouille,
**caractérisé par le fait que**
- les dimensions du profil de section transversale extérieure de la tête de vis (42) de chaque unité de vissage (40) sont conçues de telle sorte que ladite tête centre ladite unité de vissage (40) à l'intérieur de la rainure (22) de la première barre profilée (20), et
- les dimensions du profil du pourtour extérieur de la tige de vis (44) de chaque unité de vissage (40) sont conçues de façon telle que ladite tige pénètre, avec effet de centrage, dans la rainure (32) de la seconde barre profilée (30) ; ou bien le coulisseau (50) prévu au minimum, introduit dans la rainure (32) de la seconde barre profilée (30), renferme un élément de centrage (60) présentant une largeur (BZ) correspondant, pour l'essentiel, à la largeur (B) de ladite rainure (32) de la seconde barre profilée (30), ce qui procure un centrage dudit coulisseau (50) à l'intérieur de ladite rainure (32).

2. Dispositif de liaison selon la revendication 1,
**caractérisé par le fait que**
- la tige de vis cylindrique (44) des unités de vissage (40) présente un diamètre (D) correspondant, pour l'essentiel, à la largeur (B) de la rainure (32) de la seconde barre profilée (30).

3. Dispositif de liaison selon la revendication 1 et/ou 2,
**caractérisé par le fait que**
- la tête de vis (42) des unités de vissage possède un profil cylindrique appliqué avec effet de centrage, le long de trois génératrices (46), contre le profil intérieur de la rainure (22) de la première barre profilée (20).

4. Dispositif de liaison selon la revendication 1 et/ou 2,
**caractérisé par le fait que**
- l'élément de centrage (60) est réalisé sous la forme d'un élément emboîtable pouvant être emboîté sur le coulisseau (50) ou faisant corps avec ce dernier.

5. Dispositif de liaison selon l'une ou plusieurs des revendications précédentes,
**caractérisé par le fait que**
- le diamètre de chaque évidement (16) correspond, pour l'essentiel, au diamètre (D) de la tige de vis (44) de l'unité de vissage (40).

6. Dispositif de liaison selon l'une ou plusieurs des revendications précédentes,
**caractérisé par**
- la présence de deux unités de vissage (40) et d'une unité de solidarisation (12) à plaquette, présentant en conséquence deux évidements ininterrompus (16), et les deux unités de vissage peuvent être vissées dans un coulisseau respectif (18), ou dans un coulisseau commun (50 ; 80) à filetages intérieurs (52) correspondants.

7. Dispositif de liaison selon l'une ou plusieurs des revendications précédentes,
**caractérisé par le fait que**
- la tête de vis (42) de l'unité de vissage (40) possède une configuration intérieure polygonale, en vue de l'engagement d'un outil.

8. Dispositif de liaison selon l'une ou plusieurs des revendications précédentes,
**caractérisé par le fait que**
- les unités de vissage sont retenues amoviblement par l'intermédiaire d'une unité de retenue, notamment d'une bague de retenue, sur l'unité de solidarisation à plaquette.

9. Dispositif de liaison (10.3) selon l'une ou plusieurs des revendications précédentes,
**caractérisé par le fait que**
- l'unité de solidarisation (13) à plaquette comporte au moins une fente (72) ouverte vers l'extérieur et ininterrompue sur l'épaisseur de ladite unité de solidarisation (13) à plaquette.

10. Dispositif de liaison selon la revendication 9,
**caractérisé par le fait que**
- la largeur (B) de la fente (72) correspond à la largeur (B) de la rainure (22 ; 32) de la première barre profilée ou de la seconde barre profilée, respectivement.

11. Dispositif de liaison selon la revendication 10,
**caractérisé par le fait que**
- la profondeur (L) de la fente (72) correspond à la profondeur de la rainure (22) de la première barre profilée (20).

12. Dispositif de liaison selon l'une ou plusieurs des revendications 9 à 11,
**caractérisé par le fait que**
- l'unité de solidarisation (13) à plaquette présente la fente (72) dans une région du bord central, et l'évidement (16) dans la région du bord central opposée.

13. Dispositif de liaison selon la revendication 12,
**caractérisé par le fait que**
- l'unité de solidarisation (15) à plaquette présente un évidement respectif (16) dans les deux régions restantes du bord central.

14. Dispositif de liaison selon l'une ou plusieurs des revendications 9 à 11,
**caractérisé par le fait que**
- l'unité de solidarisation (17) à plaquette présente une fente respective (72) dans des régions du bord central opposées, et un évidement respectif (16) dans les deux autres régions du bord central s'étendant transversalement aux régions précitées.

15. Dispositif de liaison selon la revendication 6,
**caractérisé par le fait que**
- l'unité de solidarisation (12) à plaquette peut être reliée à la face extrême de la première barre profilée par l'intermédiaire d'une vis centrale (26) pouvant être vissée dans un évidement (28) de ladite première barre profilée (20), et
- le coulisseau commun (80) possède, entre ses deux évidements pourvus d'un filetage intérieur (52) destiné aux unités de vissage (40.1), un évidement central (82) à travers lequel peut être guidé(e) un outil (84) destiné à visser la vis centrale (26) dans l'évidement (28) de la première barre profilée (20), ou bien ladite vis centrale proprement dite.
